Europäisches Patentamt

European Patent Office

Office européen des brevets

(19)

(11) Numéro de publication : **0 455 541 B1**

# (12) FASCICULE DE BREVET EUROPEEN

(45) Date de publication du fascicule du brevet :
17.05.95 Bulletin 95/20

(51) Int. Cl.⁶ : **G02F 1/135**

(21) Numéro de dépôt : **91401076.4**

(22) Date de dépôt : **23.04.91**

(54) **Modulateur spatial de lumière à base de polymère photoconducteur.**

(30) Priorité : **02.05.90 FR 9005542**

(43) Date de publication de la demande :
**06.11.91 Bulletin 91/45**

(45) Mention de la délivrance du brevet :
**17.05.95 Bulletin 95/20**

(84) Etats contractants désignés :
**DE GB**

(56) Documents cités :
**EP-A- 0 189 991**
**PATENT ABSTRACTS OF JAPAN vol. 8, no.**
**257 (P-316)(1694) 24 Novembre 1984 (RICOH)**
**24 Juillet 1984; & JP-A-59 128 521**

(73) Titulaire : **THOMSON-CSF**
**173, Boulevard Haussmann**
**F-75008 Paris (FR)**

(72) Inventeur : **Broussoux, Dominique**
**Thomson-CSF,**
**SCPI,**
**Cedex 67**
**F-92045 Paris La Défense (FR)**
Inventeur : **Ayral, Jean-Luc**
**Thomson-CSF,**
**SCPI,**
**Cedex 67**
**F-92045 Paris La Défense (FR)**
Inventeur : **Lagarde, Marc**
**Thomson-CSF,**
**SCPI,**
**Cedex 67**
**F-92045 Paris La Défense (FR)**

(74) Mandataire : **Guérin, Michel et al**
**THOMSON-CSF**
**SCPI**
**B.P. 329**
**50, rue Jean-Pierre Timbaud**
**F-92402 Courbevoie Cédex (FR)**

EP 0 455 541 B1

## Description

La présente invention concerne un modulateur spatial de lumière (MSL) comprenant une couche de matériau photoconducteur associée à une couche de cristal liquide.

D'une façon générale un MSL est constitué d'une couche photoconductrice juxtaposée à une couche de matériau électrooptique. La couche photosensible détecte une distribution d'intensité incidente et induit une distribution de charges sur le matériau électrooptique qui modifie localement ses propriétés optiques. La lumière transmise ou réfléchie par un MSL voit ainsi son amplitude ou sa phase spatialement modulée.

En effet, l'apport de photons sur un matériau photoconducteur conduit à un transfert d'électrons d'un niveau énergétique fondamental à un niveau énergétique excité et donc à une augmentation de courant qui se traduit par une diminution de la résistivité.

Pour transmettre sélectivement des informations au matériau électrooptique (cristal liquide (XL)), le photoconducteur (PC) doit être très résistif dans l'obscurité et répondre à la condition suivante :

$(\rho_{PC})$ éclairement « $\rho_{XL}$.

où p représente la résistivité.

La tension appliquée au cristal liquide est alors
- négligeable dans l'obscurité
- sensiblement égale à la tension appliquée à l'ensemble des deux couches pour un flux incident suffisant et donc susceptible de modifier les propriétés optiques du cristal liquide (variation d'indice optique du matériau biréfringent) en cas d'éclairement.

Les MSL sont utilisés en transmission dans le traitement optique du signal telle que la conversion incohérente-cohérente, la conversion de longueur d'onde ou l'amplification optique (R.S. Mc Euen, J. Phys. E. Scien. Instr. 20 (1987). Ils peuvent être utilisés en réflexion dans la projection d'images de tubes à rayons cathodiques (CRT) sur grand écran, dite plus généralement télévision à projection. L'association de trois CRT et de trois MSL permet de moduler les trois couleurs rouge-vert-bleu et ainsi de recomposer par mixage une image télévision couleur projetée sur grand écran (R.J. Fergenblatt- Seminaire 14 Electronic Projection Displays (1987).

Actuellement dans les MSL en transmission et en réflexion la couche photoconductrice est réalisée à partir de matériaux inorganiques tels que :
- des semiconducteurs, photoconducteurs intrinsèques ou dopés. Il s'agit de semiconducteurs dans lesquels la bande interdite est suffisamment étroite pour transférer des électrons de la bande de valence jusqu'à la bande de conduction sous l'action de photons. Dans ce cas, leur sensibilité est limitée au visible et au proche infrarouge. Pour accroître cette sensibilité jusqu'à l'infrarouge lointain les semiconducteurs peuvent être dopés par un métal. En effet, le dopage permet d'introduire des niveaux supplémentaires d'énergie qui facilitent l'excitation par des photons de faible énergie. A titre d'exemple, des MSL ont été réalisés à partir de CdS (Grinberg et all.., Opt. Engin. 14 217 (1975)) où de silicium amorphe a-Si (D. William et al. J. Phys. D. Appl. Phys. 21 (1988))
- des cristaux : après la mise en évidence des propriétés photoconductrices du $Bi_{12}SiO_{20}$ (Aubourg et al. Appl. Opt. 21 3706-12 (1982), des MSL composés de ce cristal ont montré des performances très intéressantes.

Parallèlement à tous ces composés inorganiques, Mylnivok et al (Sov. Tech. Phys. Lett. 11 (1) et 30 (4) 1985 et 32 (10) 1987) ont tenté d'introduire des matériaux polymères comme photoconducteurs dans ce type d'application. Ils ont utilisé un polyimide aux propriétés mécaniques et thermiques intéressantes et dont le dopage permet l'obtention d'un matériau photoconducteur, ce polyimide ne présentant pas en soi d'effet photoconducteur. Par ailleurs, le document JP-A-59 128 521 décrit un MSL dans lequel la couche de photoconducteur, associée à une couche de cristaux liquides, est en polyvinyl carbazole, dopée. Mais on sait que le PVK est relativement lent.

D'une façon générale, les performances d'un MSL s'évaluent selon les critères suivants :
- forte mobilité des porteurs $(\mu)$
- grande résistivité du photoconducteur dans le noir $(\rho_o)$
- grande sensibilité au flux lumineux $(\beta)$
la conductivité est liée au flux lumineux par l'équation suivante :

$$\tau = \tau_o + \beta I$$

I : intensité du flux lumineux
$\beta$ : dépend de $\mu$, $\tau$ (durée de vie), $\eta$ (rendement quantique)
$\tau_o = 1/\rho_o$ conductivité dans le noir
- bonne résolution spatiale.

Une forte mobilité des porteurs permet d'obtenir un temps de réponse, plus précisément un temps d'extinction à 10 % , rapide. Ce temps de réponse doit être du même ordre de grandeur que celui de réponse du cristal liquide (autour de 100 μs à 1 ms).

La sensibilité c'est-à-dire la puissance par unité de surface nécessaire pour passer de 10 % à 90 % de transmission permettant d'atteindre un bon rendement doit se situer entre 1 et 3 mW/cm².

La résolution spatiale liée à la nature du photoconducteur mais également à ses dimensions est actuellement de 70 paires de lignes (pl)/mm (cas du a-Si), 40 pl/mm pour le Cds et de 12 pl/mm pour le $Bi_{12}SiO_{20}$ (dont l'épaisseur pour des raisons technologiques est difficilement rendue à 300 μm).

La présente invention permet de répondre à toutes ces exigences. Elle concerne un MSL qui comprend une couche de polymère présentant un effet photoconducteur intrinsèque. Ce polymère sera choisi parmi les polymères silicés ou germanés.

Ces polymères possèdent un très grande sensibilité à la lumière et un temps de réponse rapide. En effet, la mobilité des porteurs est égale à $10^{-4}$ cm²/Vs, soit 100 à 1000 fois plus grande que celle habituellement mesurée dans les autres polymères. Ces polymères sont intrinsèquement photoconducteurs grâce au faible gap d'énergie qui existe entre les niveaux énergétiques (état fondamental et état excité) dans les liaisons σ - σ* entre atomes Si-Si ou Ge-Ge. Les polymères proposés par Mylnivok ne sont rendus photoconducteurs que par la présence de dopants et le transport de porteurs est beaucoup plus lent dans ce type de matrice. Il en est de même pour le polyvinyle carbazole (PVK) dopé avec de la trinitrofluorénone, connu pour ses bonnes propriétés de photoconduction et non pas pour des temps de réponse très rapides.

Ces polymères photoconducteurs silicés ou germanés peuvent être dopés pour accroître leur sensibilité et l'adapter à la longueur d'onde d'enregistrement désirée.

Ils présentent le grand avantage d'une mise en oeuvre simple et peu onéreuse. En effet, par la méthode dite de la tournette on réalise des films minces (épaisseur de l'ordre du micromètre), ces très faibles épaisseurs contribuant à obtenir une grande résolution spatiale. Actuellement l'obtention d'une couche de $Bi_{12}SiO_{20}$ dans les MSL reste très coûteuse et l'usinage du cristal ne permet pas d'atteindre des dimensions inférieures à plusieurs centaines de microns.

Enfin ces polymères autorisent un ancrage direct du cristal liquide sur leur surface et permettent d'éviter le dépôt d'une couche intermédiaire d'orientation du cristal liquide (classiquement on emploie du polyimide ou du polyvinyl alcool pour orienter le cristal liquide ).

L'invention a donc pour objet un modulateur spatial de lumière tel que défini dans la revendication 1.

L'invention sera mieux comprise et d'autres avantages apparaîtront à la lecture de la description qui va suivre, donnée à titre d'exemple non limitatif, et grâce aux figures annexées parmi lesquelles :
- les figures 1 et 2 représentent les formules chimiques des polysilanes et des polygermanes utilisés,
- la figure 3 représente un modulateur spatial de lumière en transmission selon l'invention,
- la figure 4 représente un modulateur spatial de lumière en réflexion selon l'invention.

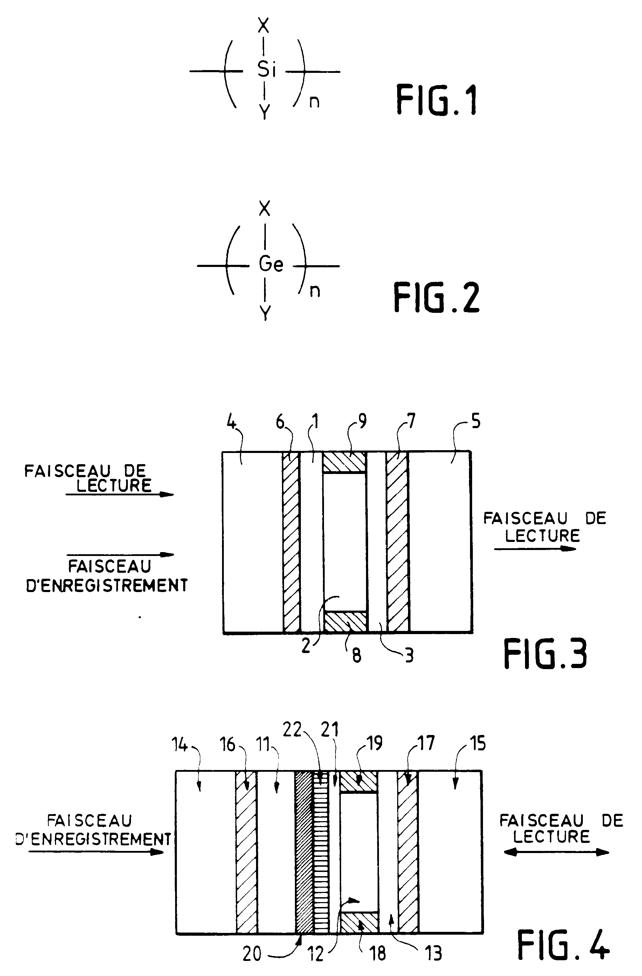

Les figures 1 et 2 représentent les formules chimiques des polysilanes (figure 1) et des polygermanes (figure 2) utilisables dans les MSL selon l'invention. Dans ces formules les radicaux X et Y sont indifféremment des chaînes latérales constituées de groupements organiques, tels que des radicaux alkyles, allyles ou aryles, n représentant le degré de polymérisation.

Exemple 1: Cet exemple se rapporte à un modulateur de lumière fonctionnant en transmission et représenté à la figure 3. Ce MSL est composé de trois couches organiques :
- une couche 1 d'un film photoconducteur,
- une couche 2 de cristal liquide
- une couche 3 d'orientation du cristal liquide (par exemple un film de polyimide ou de polyvinyl alcool).

Ces trois couches sont comprises entre deux lames de verre 4 et 5 supportant sur leurs faces internes des électrodes transparentes 6 et 7 (ou des jeux d'électrodes). Les électrodes sont par exemple réalisées en oxyde mixte d'étain et d'indium (électrodes ITO). La couche de polymère photoconducteur est réalisée de la façon suivante par exemple : une solution de polyméthylphénylsilane (10 % ) est préparée dans du toluène en présence de 1 % de molécules accepteurs d'électrons, molécules de trinitrofluorénone (TNF) de façon à ce que le film photoconducteur déposé sur le substrat verre-électrode ITO par la méthode dite "à la tournette" contiennent environ 10 % en fraction molaire de TNF. Ensuite, le film est recuit à 100°C pendant 2 heures afin d'éliminer le solvant résiduel.

Afin d'orienter le cristal liquide, il convient de rayer la couche de polysilane par les méthodes bien connues de l'homme de l'art.

Enfin la cellule complète contenant le cristal liquide est réalisée par les techniques d'écrans à cristal liquide connues de l'homme de l'art en utilisant des cales d'épaisseur 8 et 9 en mylar ou autre.

En déposant une couche de polyméthylphénylsilane de 1 μm d'épaisseur recouverte par une couche cristal liquide nématique commercialisé par la Société BDH (référencé E7) de 3 μm d'épaisseur et en tenant compte des résistivités (0,2.$10^{15}$ Ω cm pour le polysilane, $10^{11}$ Ω cm pour le cristal liquide), de la sensibilité à 514 nm

du polysilane $\beta = 10^{-8}\ \Omega^{-1}$ cm W$^{-1}$ et des constantes diélectriques $\varepsilon$ (2,8 pour le polysilane et 8 pour le cristal liquide), on obtient un temps de relaxation diélectrique de 1 ms et un fonctionnement jusqu'à 100 Hertz pour une longueur d'onde d'enregistrement de 514,5 nm et une longueur d'onde de lecture de 633 nm. Evidemment rien n'interdit d'utiliser une couche de cristal liquide smectique C∗ qui permet d'atteindre des temps de réponse < à 100 µs.

Exemple 2 : Cet exemple se rapporte à un modulateur de lumière fonctionnant en réflexion et représenté à la figure 4. Comme précédemment le modulateur comprend des lames de verre 14 et 15 supportant sur leurs faces internes des électrodes ITO 16 et 17, une couche photoconductrice 11, comme décrit dans l'exemple 1, une couche 12 de cristal liquide comme décrit dans l'exemple 1, des cales d'épaisseurs 18 et 19, une couche 13 d'orientation du cristal liquide. Ce type de MSL est un peu plus complexe car il convient de déposer une couche absorbante 20 de la lumière du faisceau de lecture en polyméthylmétacrylate dopée à 20 % de colorant adapté en longueur d'onde et une couche réfléchissante 21 en ZnS - TiO$_2$ ou SiO - SiO$_2$ déposées en pulvérisation cathodique ou en polysilane/polysiloxane déposée par la technique Langmuir-Blodgett afin de réfléchir la lumière de lecture. Dans le cas du miroir diélectrique inorganique, il est nécessaire de déposer deux couches d'orientation du cristal liquide : une sur l'électrode ITO côté verre (c'est la couche 13), l'autre sur la couche réfléchissante : c'est la couche 22. Dans le cas du miroir diélectrique organique, la dernière couche peut être rayée et ainsi servir de couche d'orientation du cristal liquide. La cellule est réalisée selon les techniques utilisées par l'homme de l'art des cristaux liquides.

## Revendications

1. Modulateur spatial de lumière du type associant une couche de cristal liquide (2, 12) avec une couche d'un matériau photoconducteur (1, 11), caractérisé en ce que le matériau photoconducteur est à base de polysilane ou de polygermane, répondant aux formules chimiques suivantes :

$$\left(\begin{array}{c} X \\ | \\ Si \\ | \\ Y \end{array}\right)_n \qquad \left(\begin{array}{c} X \\ | \\ Ge \\ | \\ Y \end{array}\right)_n$$

X et Y étant des groupements organiques
n représentant le degré de polymérisation.

2. Modulateur selon la revendication 1, caractérisé en ce que les groupements organiques sont indifféremment des radicaux alkyles, allyles ou aryles.

3. Modulateur selon la revendication 2, caractérisé en ce que le matériau photoconducteur est le polyméthylphénylsilane.

4. Modulateur selon l'une quelconque des revendications 1 à 3, caractérisé en ce que le matériau photoconducteur contient des dopants.

5. Modulateur selon la revendication 4, caractérisé en ce que le dopant est constitué de molécules de trinitrofluorénone.

6. Modulateur selon l'une quelconque des revendications 1 à 5, caractérisé en ce que la surface du matériau photoconducteur qui est en contact avec la couche de cristal liquide est traitée mécaniquement pour servir de couche d'ancrage aux molécules de cristal liquide.

## Patentansprüche

1. Räumlicher Lichtmodulator, der eine Flüssigkristallschicht (2, 12) mit einer Schicht aus fotoleitendem Material (1, 11) kombiniert, dadurch gekennzeichnet, daß das fotoleitende Material auf Polysilanen oder Polygermanen beruht, die folgenden chemischen Formeln entsprechen:

$$-\left(\begin{array}{c} X \\ | \\ Si \\ | \\ Y \end{array}\right)_n \qquad\qquad -\left(\begin{array}{c} X \\ | \\ Ge \\ | \\ Y \end{array}\right)_n$$

wobei X und Y organische Gruppen sind und n den Polymerisationsgrad angibt.

2. Modulator nach Anspruch 1, dadurch gekennzeichnet, daß die organischen Gruppen wahlweise Alkyl-, Allyl- oder Arylradikale sind.

3. Modulator nach Anspruch 2, dadurch gekennzeichnet, daß das fotoleitende Material Polymethylphenylsilan ist.

4. Modulator nach einem beliebigen der Ansprüche 1 bis 3, dadurch gekennzeichnet, daß das fotoleitende Material Dotierstoffe enthält.

5. Modulator nach Anspruch 4, dadurch gekennzeichnet, daß der Dotierstoff aus Molekülen von Trinitrofluorenon besteht.

6. Modulator nach einem beliebigen der Ansprüche 1 bis 5, dadurch gekennzeichnet, daß die Oberfläche des fotoleitenden Materials, die mit der Flüssigkristallschicht in Kontakt steht, mechanisch behandelt wird, um als Verankerungsschicht für die Moleküle des Flüssigkristalls zu dienen.

## Claims

1. Spatial light modulator of the type associating a liquid-crystal layer (2, 12) with a layer (1, 11) of a photoconductive material, characterized in that the photoconductive material is based on a polysilane or a polygermane, satisfying the following chemical formulae:

$$-\left(\begin{array}{c} X \\ | \\ Si \\ | \\ Y \end{array}\right)_n \qquad\qquad -\left(\begin{array}{c} X \\ | \\ Ge \\ | \\ Y \end{array}\right)_n$$

X and Y being organic groups
n representing the degree of polymerization.

2. Modulator according to Claim 1, characterized in that the organic groups are, as desired, alkyl, allyl or aryl radicals.

3. Modulator according to Claim 2, characterized in that the photoconductive material is polymethylphenylsilane.

4. Modulator according to any one of Claims 1 to 3, characterized in that the photoconductive material contains dopants.

5. Modulator according to Claim 4, characterized in that the dopant consists of molecules of trinitrofluorenone.

6. Modulator according to any one of Claims 1 to 5, characterized in that the surface of the photoconductive material which is in contact with the liquid-crystal layer is mechanically treated in order to serve as a layer for anchoring the liquid-crystal molecules.

EP 0 455 541 B1

$$\left(\begin{array}{c} X \\ | \\ Si \\ | \\ Y \end{array}\right)_n$$ FIG.1

$$\left(\begin{array}{c} X \\ | \\ Ge \\ | \\ Y \end{array}\right)_n$$ FIG.2

FAISCEAU DE LECTURE →

FAISCEAU D'ENREGISTREMENT →

FAISCEAU DE LECTURE →

FIG.3

FAISCEAU D'ENREGISTREMENT →

FAISCEAU DE LECTURE ←→

FIG.4

6